# EUROPEAN PATENT SPECIFICATION

(11) **EP 3 190 917 B1**
(45) Date of publication and mention of the grant of the patent: **29.01.2020**
(21) Application number: 15840374.1
(22) Date of filing: 11.09.2015
(51) Int. Cl.: A44B 19/58, A44B 19/60, A44B 19/62, A44B 19/08, A44B 19/14, A44B 19/32

(54) **METHOD FOR INSTALLING SLIDE FASTENER ASSEMBLY IN THIN SHELL GARMENT**
VERFAHREN ZUR MONTAGE EINER REISSVERSCHLUSSANORDNUNG AN EINEM KLEIDUNGSSTÜCK MIT DÜNNEM AUSSENMATERIAL
PROCÉDÉ D'INSTALLATION D'UN ENSEMBLE FERMETURE À CRÉMAILLÈRE DANS UN VÊTEMENT À ENVELOPPE MINCE

(30) Priority: 11.09.2014 US 201462049154 P; 04.09.2015 US 201514846017
(43) Date of publication of application: 19.07.2017
(73) Proprietor: Ideal Fastener Corporation, Oxford, NC 27565 (US)
(72) Inventor: DAVIS, Gary, Oxford, NC 27565 (US); MAYO, William, Garland, Raleigh, NC 27612 (US)
(74) Representative: Barker Brettell LLP
(86) International application number: PCT/US2015/049555
(87) International publication number: WO 2016/040726

(56) References cited:
- EP-A2- 0 875 167
- US-A- 3 488 239
- US-A- 3 492 714
- US-A- 5 806 163
- US-A1- 2010 154 179
- US-B2- 6 502 285

## Description

### BACKGROUND OF THE PRESENT INVENTION

### Field of the Present Invention

The present invention relates generally to a slide fastener assembly (e.g., a zipper) for a thin shell garment, and, in particular, to a method of installing a slide fastener assembly in a thin shell garment.

### Background

Garment manufacturing processes generally involve the use and assembly of unrefined and semi-finished components. For example, a jacket may include a rear panel, a left front panel, a right front panel, a right sleeve, and a left sleeve. Once those components are combined, various finishing elements, such as linings and fabric trims (i.e., elastic waist bands, piping, collars, and the like), can be installed. Closure trims, including snaps, buttons, and/or zippers, can then be added to the assembled jacket. When a zipper is used as a closure, the zipper is generally first assembled from its constituent components to form a finished zipper assembly prior to installation in the garment. Manufacture of a finished zipper assembly typically involves pre-cutting a length of zipper chain (which is itself an assembly of zipper stringer tapes and zipper teeth), installation of a zipper slider, installation of a top stop, and installation of a bottom stop or a "pin and box" assembly.

Returning to the example of a jacket, a "center-front" zipper is a common closure option to close the front of the jacket. A "center-front" zipper commonly refers to a zipper of a jacket or similar garment that closes (i.e., attaches) the two front panels together (as opposed to other zippers that may be used to close pockets, attach sleeves or hoods or collars, close flaps, and the like). A center-front zipper usually has a pin and box assembly installed on the lower end of the zipper. A top stop may also be installed, although some garment applications dispense with the top stop and instead rely on certain sewing techniques to ensure that the zipper slider cannot be removed from the zipper tape (such as when the zipper slider is pulled to the top of the center-front opening). Center-front jacket zippers typically utilize zipper tapes that are made from a fabric material having at least one fabric layer. The front panels of the jacket, to which the zipper tapes are attached, likewise include at least one fabric layer and often two or more layers. Once the zipper tapes are sewn to the front panels of the jacket, the resulting fabric layer includes at least two (and often more) fabric layers, thereby creating a thickened, bulky area at the center-front of the jacket.

In high-performance jackets, such as those designed for rigorous outdoor activities, cold-weather, and/or water-resistant jackets, the use of conventional zipper assemblies can lead to undesirable consequences. For instance, in certain types of jackets, the presence of two or more fabric layers at the center-front opening creates undesirable bulkiness in the jacket at the zipper attachment part of the front panels. Bulkiness adds unnecessary weight to high-performance jackets that often utilize a "thin shell" material that provides superior cold weather insulation. Furthermore, in waterproof or water-resistant jackets, the use of zippers with traditional fabric-based zipper tapes can compromise the water-resistant aspect of the jacket. In particular, if conventional zippers are used in a waterproof or water-resistant jacket, water can penetrate the jacket by passing through the zipper tapes, the sewing thread used to affix the zipper tapes, and/or the zipper teeth.

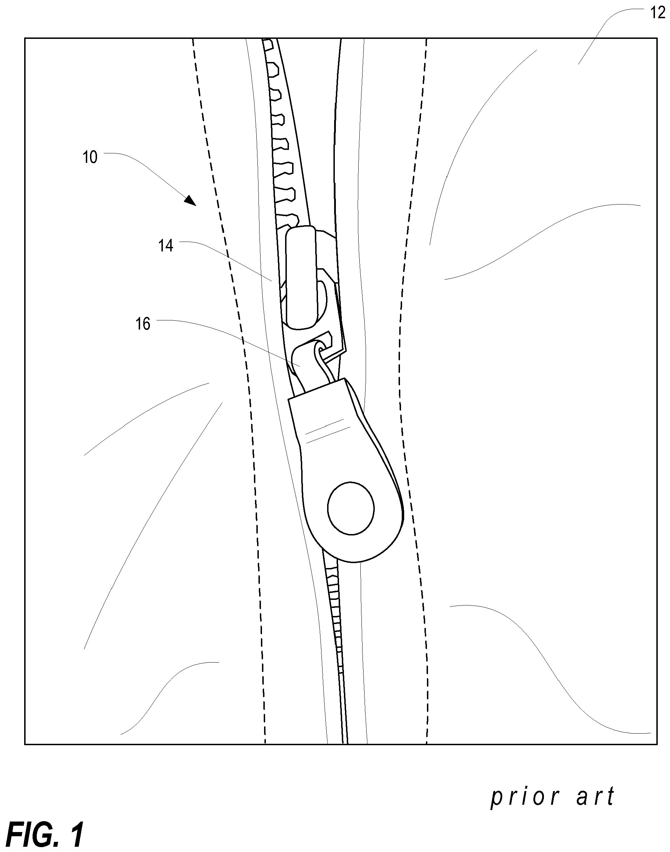

Garment manufacturers utilize a variety of known solutions to help mitigate the risk of water penetrating a jacket designed to be water-resistant. One option involves the use of flaps attached to one or both of the front panels that extend over and cover the zipper. Unfortunately, however, the use of flaps has limited effectiveness as flaps tend to move while the jacket is worn, do not close securely, tend to allow moisture to come into contact with the zipper, and tend to interfere with manipulation of the zipper slider along the zipper. In addition, flaps add considerable bulkiness to the front of a jacket. FIG. 1 is a perspective view of a conventional slide fastener assembly **10** installed in a jacket **12** with zipper flaps. As can be seen in FIG. 1, a flap of fabric material **14** at the center-front opening of the jacket **12** reduces exposure of the slide fastener assembly **10** to weather conditions. The thin shell of the garment covers some portion of the zipper tapes, but also crowds the zipper slider **16**, which tends to create undesirable bulkiness in the garment and can result in the thin shell getting snagged by the zipper slider **16**.

Another known solution for mitigating the risk of water penetration involves the use of zipper tapes that, themselves, exhibit water-resistant qualities. Water-resistant zipper tapes can be used alone or in combination with flaps to help mitigate the risk of water penetration, but neither solution reduces bulkiness arising from multiple layers of fabric material at the center-front opening of the jacket. In addition, applying a water-resistant film or coating to the zipper tapes makes the zipper assembly much less flexible.

Yet another known solution for mitigating the risk of water penetration involves attempting to minimize the "grin" of the zipper (i.e., the gap between the inner edges of the zipper tapes), thereby minimizing the area that water can penetrate. When using a narrow grin, the preferred zipper type is an invisible coil-type zipper, which is typically installed in the garment with the coil teeth facing inward (toward the wearer and away from the weather). However, in order for such a zipper to be operable, some portion of the zipper tape must remain exposed to the weather (because installing the zipper with the jacket panel or flaps completely covering the zipper tape would interfere with operation of the zipper slider).

US 3488239, US 5806163 and US 3492714 disclose examples of prior art zippers.

Accordingly, a need exists for a way to install a slide fastener assembly on a thin shell garment that reduces bulkiness and/or reduces vulnerability of the slide fastener assembly to water penetration. This, and other needs, is addressed by one or more aspects of the present invention.

### SUMMARY OF THE PRESENT INVENTION

Some exemplary embodiments of the present invention may overcome one or more of the above disadvantages and other disadvantages not described above, but the present invention is not required to overcome any particular disadvantage described above, and some exemplary embodiments of the present invention may not overcome any of the disadvantages described above.

Broadly defined, the present invention according to one aspect includes a method of preparing a semi-finished slide fastener assembly for installation in a thin shell garment. The method includes: providing a slide fastener chain comprised of two interlocked rows of teeth, each row of teeth being attached to a cord bundle of a respective slide fastener tape; removing the interlocked rows of teeth from a portion of the slide fastener chain, thereby defining a length of the slide fastener chain without teeth; introducing a reinforcing film to the cord bundles, at a location along the length of the slide fastener chain without teeth, to shape the cord bundles for accommodation of a pin and box assembly; introducing an aperture into the slide fastener chain, at a film-reinforced location along the length of the slide fastener chain without teeth, to sever the film-reinforced cord bundles; and cutting the slide fastener chain across the aperture, thereby defining a semi-finished slide fastener assembly terminating in a film-reinforced end.

In features of this aspect, the slide fastener chain may be a polyester coil-type zipper chain; the reinforcing film may include an adhesive; the portion of the slide fastener chain from which the interlocked rows of coil-type teeth are removed may be an intermediate portion; and/or introduction of the reinforcing film to the cord bundles may include ultrasonically bonding the reinforcing film to the cord bundles with an ultrasonic horn and an anvil.

In another feature of this aspect, introduction of the aperture into the slide fastener chain at a film-reinforced location may include punching the slide fastener chain with a punch to create the aperture. In another feature of this aspect, the aperture may be formed by a T-cut punch.

Broadly defined, the present invention may include a method of installing a slide fastener assembly in a thin shell garment. The method includes: preparing a semi-finished slide fastener assembly terminating in a film-reinforced end, the semi-finished slide fastener assembly being comprised of two interlocked rows of teeth, each row of teeth being attached to a cord bundle of a respective slide fastener tape; attaching the semi-finished slide fastener assembly to one or more panels of a thin shell garment; and after attachment of the semi-finished slide fastener assembly to the one or more panels of the thin shell garment, installing a pin and box assembly at the film-reinforced end of the semi-finished slide fastener assembly.

In a feature of this aspect, the method may further include, prior to installation of the pin and box assembly, installing a slider body at the film-reinforced end of the semi-finished slide fastener assembly. In another feature of this aspect, the method may further include pulling the slider body through the interlocked rows of teeth to separate the slide fastener tapes from one another.

In another feature of this aspect, attaching the semi-finished slide fastener assembly to the thin shell garment may include: applying a thin-film adhesive to a side of the slide fastener tapes of the semi-finished slide fastener assembly opposite of the teeth; and adhering the semi-finished slide fastener assembly to an interior-facing side of the thin shell garment.

In another feature of this aspect, the semi-finished slide fastener assembly may be attached to one or more panels of the thin shell garment that define a center-front opening.

In another feature of this aspect, installing the pin and box assembly may include: staking or clamping a pin of the pin and box assembly to a film-reinforced cord bundle of one of the slide fastener tapes; and staking or clamping a box of the pin and box assembly to a film-reinforced cord bundle of the other of the slide fastener tapes.

Broadly defined, the present invention according to another aspect includes a method of installing a slide fastener assembly in a thin shell garment. The method includes: providing a slide fastener chain comprised of two interlocked rows of teeth, each row of teeth being attached to a cord bundle of a respective slide fastener tape; removing the interlocked rows of teeth from a portion of the slide fastener chain, thereby defining a length of the slide fastener chain without teeth; introducing a reinforcing film to the cord bundles, at a location along the length of the slide fastener chain without teeth, to shape the cord bundles for accommodation of a pin and box assembly; cutting the slide fastener chain at a film-reinforced location along the length of the slide fastener chain without teeth, thereby defining a semi-finished slide fastener assembly terminating in a film-reinforced end; attaching the semi-finished slide fastener assembly to one or more panels of a thin shell garment; and after attachment of the semi-finished slide fastener assembly to the one or more panels of the thin shell garment, installing the pin and box assembly at the film-reinforced end of the semi-finished slide fastener assembly.

In features of this aspect, the slide fastener chain may be a polyester coil-type zipper chain; and/or introducing the reinforcing film to the cord bundles may include ultrasonically bonding the reinforcing film to the cord bundles with an ultrasonic horn and an anvil.

In another feature of this aspect, attaching the semi-finished slide fastener assembly to the thin shell garment may include: applying a thin-film adhesive to a side of the slide fastener tapes of the semi-finished slide fastener assembly opposite of the teeth; and adhering the semi-finished slide fastener assembly to an interior-facing side of the thin shell garment.

In another feature of this aspect, the semi-finished slide fastener assembly may be attached to one or more panels of the thin shell garment that define a center-front opening.

In another feature of this aspect, installing the pin and box assembly may include: staking or clamping a pin of the pin and box assembly to a film-reinforced cord bundle of one of the slide fastener tapes; and staking or clamping a box of the pin and box assembly to a film-reinforced cord bundle of the other of the slide fastener tapes.

In another feature of this aspect, the method may further include, prior to cutting the slide fastener chain at the film-reinforced location along the length of the slide fastener chain without teeth, forming an aperture in the slide fastener chain at the film-reinforced location by using a T-cut punch, thereby severing the film-reinforced cord bundles.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

Further features, embodiments, and advantages of the present invention will become apparent from the following detailed description with reference to the drawings, wherein:
FIG. 1 is a perspective view of a conventional slide fastener assembly installed in a jacket with zipper flaps;
FIG. 2 is a partial front view of a slide fastener assembly installed in a thin shell garment in accordance with one or more aspects of the present invention;
FIG. 2A is a sectional view of the slide fastener assembly of FIG. 2, taken along line 2A-2A;
FIG. 2B is an enlarged view of a portion of the slide fastener assembly of FIG. 2A;
FIG. 2C is a perspective view of the slide fastener assembly of FIG. 2;
FIG. 3 is a flow chart illustrating a method of preparing a semi-finished slide fastener assembly prior to installation in a thin shell garment;
FIGS. 3A-3E are illustrations that correspond with the flow chart of FIG. 3;
FIG. 4 is a flow chart illustrating a method of bonding the semi-finished slide fastener assembly of FIG. 3E to a thin shell garment;
FIGS. 4A-4C are illustrations that correspond with the flow chart of FIG. 4;
FIG. 5 is a flow chart illustrating a method of installing a slider body and pin and box assembly in the semi-finished slide fastener assembly of FIG. 4; and
FIGS. 5A-5D are illustrations that correspond with the flow chart of FIG. 5.

### DETAILED DESCRIPTION

As a preliminary matter, it will readily be understood by one having ordinary skill in the relevant art ("Ordinary Artisan") that the present invention has broad utility and application. Furthermore, any embodiment discussed and identified as being "preferred" is considered to be part of a best mode contemplated for carrying out the present invention. Other embodiments also may be discussed for additional illustrative purposes in providing a full and enabling disclosure of the present invention. As should be understood, any embodiment may incorporate only one or a plurality of the above-disclosed aspects of the invention and may further incorporate only one or a plurality of the above-disclosed features. Moreover, many embodiments, such as adaptations, variations, modifications, and equivalent arrangements, will be implicitly disclosed by the embodiments described herein and fall within the scope of the present invention.

Accordingly, while the present invention is described herein in detail in relation to one or more embodiments, it is to be understood that this disclosure is illustrative and exemplary of the present invention, and is made merely for the purposes of providing a full and enabling disclosure of the present invention. The detailed disclosure herein of one or more embodiments is not intended, nor is to be construed, to limit the scope of patent protection afforded the present invention, which scope is to be defined by the claims.

Thus, for example, any sequence(s) and/or temporal order of steps of various processes or methods that are described herein are illustrative and not restrictive. Accordingly, it should be understood that, although steps of various processes or methods may be shown and described as being in a sequence or temporal order, the steps of any such processes or methods are not limited to being carried out in any particular sequence or order, absent an indication otherwise. Indeed, the steps in such processes or methods generally may be carried out in various different sequences and orders while still falling within the scope of the present invention. Accordingly, it is intended that the scope of patent protection afforded the present invention is to be defined by the appended claims rather than the description set forth herein.

Additionally, it is important to note that each term used herein refers to that which the Ordinary Artisan would understand such term to mean based on the contextual use of such term herein. To the extent that the meaning of a term used herein-as understood by the Ordinary Artisan based on the contextual use of such term-differs in any way from any particular dictionary definition of such term, it is intended that the meaning of the term as understood by the Ordinary Artisan should prevail.

Furthermore, it is important to note that, as used herein, "a" and "an" each generally denotes "at least one," but does not exclude a plurality unless the contextual use dictates otherwise. Thus, reference to "a picnic basket having an apple" describes "a picnic basket having at least one apple" as well as "a picnic basket having apples." In contrast, reference to "a picnic basket having a single apple" describes "a picnic basket having only one apple."

When used herein to join a list of items, "or" denotes "at least one of the items," but does not exclude a plurality of items of the list. Thus, reference to "a picnic basket having cheese or crackers" describes "a picnic basket having cheese without crackers," "a picnic basket having crackers without cheese," and "a picnic basket having both cheese and crackers." Finally, when used herein to join a list of items, "and" denotes "all of the items of the list." Thus, reference to "a picnic basket having cheese and crackers" describes "a picnic basket having cheese, wherein the picnic basket further has crackers," as well as describes "a picnic basket having crackers, wherein the picnic basket further has cheese."

Referring now to the drawings, in which like numerals represent like components throughout the several views, one or more preferred embodiments of the present invention are next described. The following description of one or more preferred embodiment(s) is merely exemplary in nature and is in no way intended to limit the invention, its application, or uses.

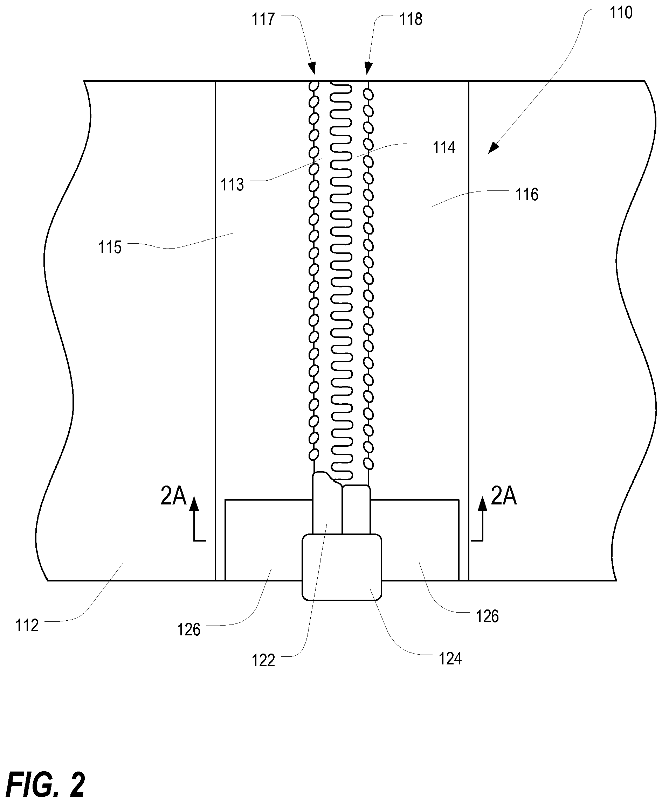

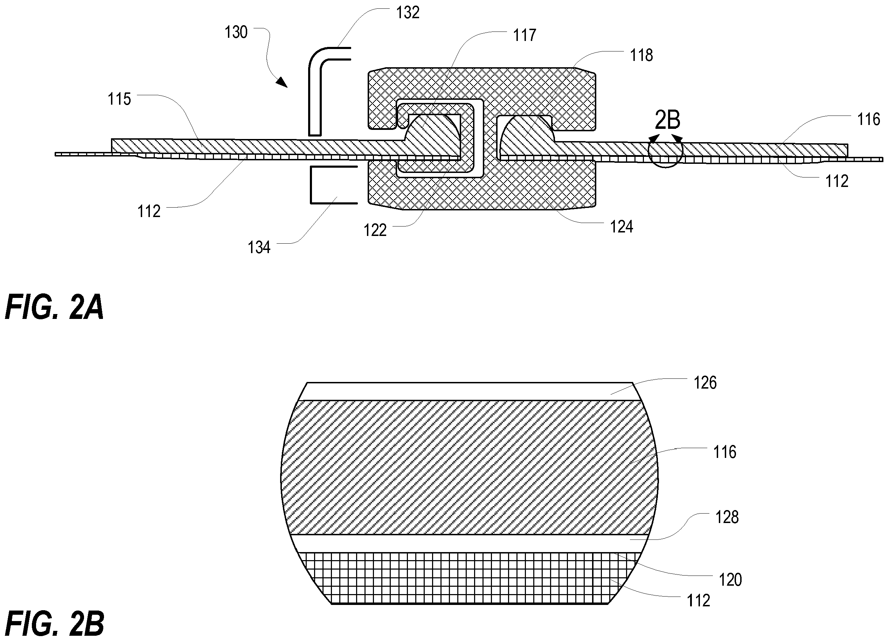

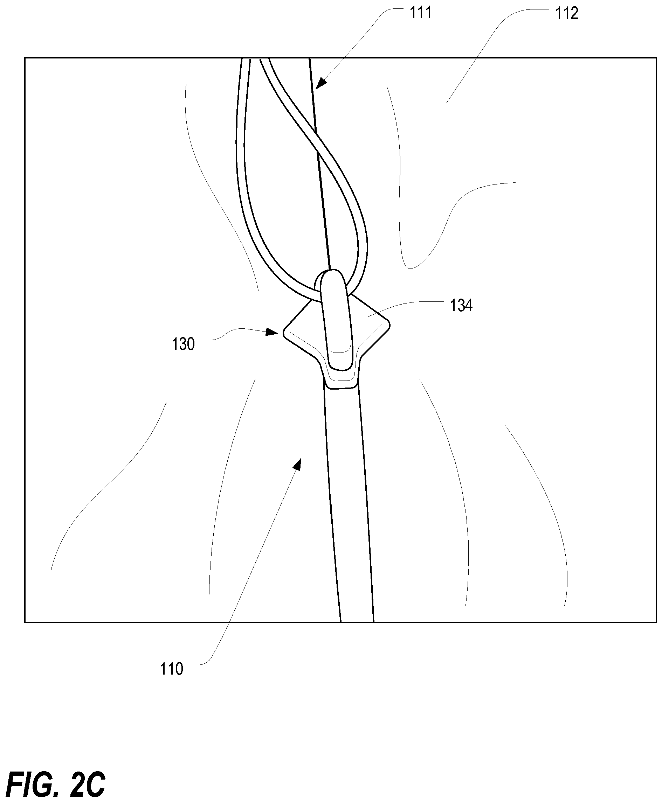

FIG. 2 is a partial front view of a slide fastener assembly **110** installed in a thin shell garment **112** in accordance with one or more aspects of the present invention. FIG. 2 provides a view of the slide fastener assembly **110** from inside the garment and depicts the slide fastener assembly **110** in a closed (i.e., fastened) configuration. As can be seen in FIG. 2, the slide fastener assembly **110** includes two rows of coil-type zipper teeth **113**,**114**, each of which is attached to the cord bundle **117**,**118** of a corresponding slide fastener tape **115**,**116**. The base of the slide fastener assembly **110** includes a pin and box assembly (comprised of a pin **122** anchored at an end of the first slide fastener tape **115** and a box **124** anchored at an end of the second slide fastener tape **116**). The slide fastener assembly **110** also includes a slider body (depicted schematically in FIG. 2A) and, optionally, a top stop (not shown).

FIG. 2A is a sectional view of the slide fastener assembly **110** of FIG. 2, taken along line 2A-2A, and FIG. 2B is an enlarged view of a portion of the slide fastener assembly **110** of FIG. 2A. With reference to FIG. 2A, the thin shell outer garment **112** at least substantially-if not entirely-covers the slide fastener tapes **115**,**116** of the slide fastener assembly **110**, thereby protecting the slide fastener tapes **115**,**116** from moisture and abrasion. The "grin" (i.e., the gap **111** between the inner edges of the slide fastener tapes) of the slide fastener assembly **110** is narrow in order to help minimize exposure of the zipper teeth to the outside environment. In a contemplated embodiment, the grin of the slide fastener assembly **110** is minimized so that the thin shell garment can cover virtually the entirety of the slide fastener tapes **115**,**116** without interfering with operation of the slider body.

The slide fastener assembly **110** and the methods described herein for installing the slide fastener assembly **110** are particularly well-suited for implementation in high-performance garments, jackets, and the like. In contemplated embodiments, the slide fastener assembly **110** and the installation methods described herein are implemented in "thin shell" garments. Thin shell garments are generally used as an outer layer to shield the wearer from effects of the environment, including wind and water. Thin shell garments are generally made from a thin fabric-based or synthetic material (often comprised of a single layer) and can be used in conjunction with other layers (e.g., an insulating layer) to protect the wearer.

It is contemplated that the slide fastener tapes **115**,**116** of the slide fastener assembly **110** can be made from an ultra-thin material. In this regard, the slide fastener tapes **115**,**116** do not contribute much additional thickness when the tapes are bonded to the thin shell garment. With reference to FIGS. 2A and 2B, the slide fastener tapes **115**,**116** can be bonded to the thin shell garment **112** with an adhesive layer **120**. Additionally, at the base of the slide fastener assembly **110** where the pin and box assembly **122**,**124** is attached to the cord bundles **117**,**118**, the slide fastener tapes **115**,**116** are covered by an inner reinforcing film **126** (disposed at an interior-facing side of the slide fastener tapes **115**,**116**) and by an outer reinforcing film **128** (disposed between the adhesive layer **120** and the slide fastener tapes **115**,**116**). The reinforcing films **126**,**128** can be used to shape the cord bundles **117**,**118** so as to allow the pin and box assembly **122**,**124** to be securely attached thereto.

With further reference to FIG. 2A, a portion of the slider body **130** is shown schematically adjacent the box **124**. In particular, the slider body rail **132** and the slider body top plate **134** are depicted schematically with respect to the slide fastener tape **115.** Advantageously, the use of ultra-thin slide fastener tapes **115,116** in combination with a thin shell garment **112** yields a predictable, stable, and dimensionally narrow thickness of material, which permits the slider body **130** to move easily along the length of the rows of coil-type teeth **113,114** to zip the coil-type teeth together in an interlocking manner.

FIG. 2C is a perspective view of the slide fastener assembly **110** of FIG. 2 installed in a thin shell outer garment **112**. As shown in FIG. 2C, the thin shell garment **112** substantially-if not entirely-covers the slide fastener tapes, thereby protecting the slide fastener tapes from moisture and abrasion. To open or close the slide fastener assembly **110**, the top plate **134** of the slider body **130** can be manipulated over the sandwich of the slide fastener tapes bonded to the thin shell garment **112**. In this regard, the sandwich of the thin shell garment **112** and the ultra-thin slide fastener tapes is capable of passing through the slider body **130** smoothly, thereby helping to avoid snags and helping to prevent moisture from penetrating through the slide fastener assembly **110**.

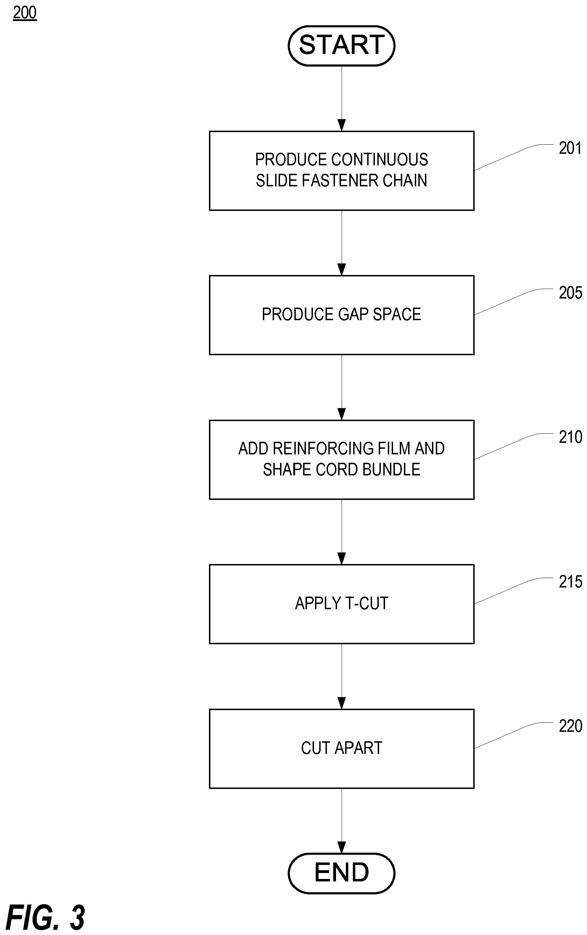

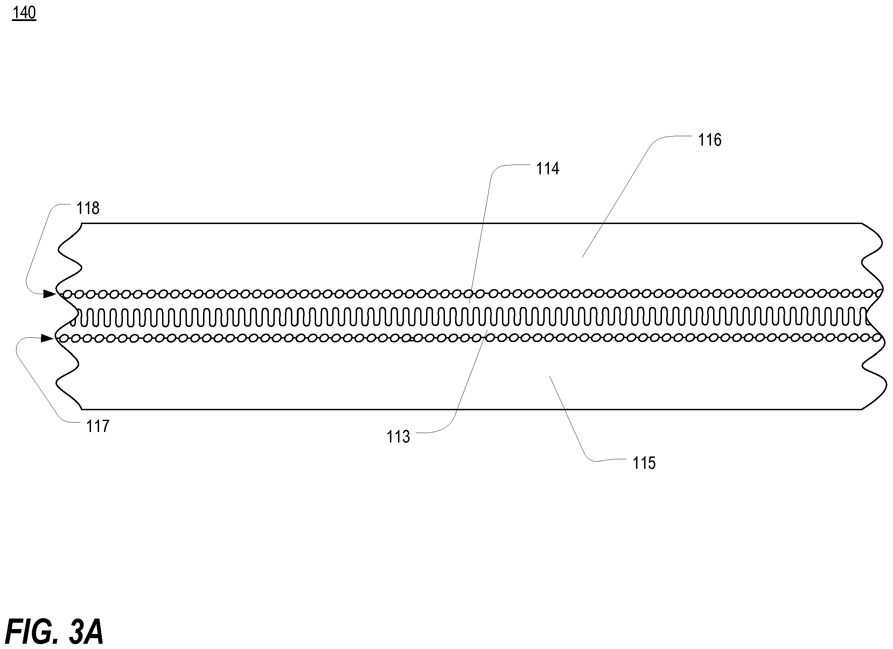

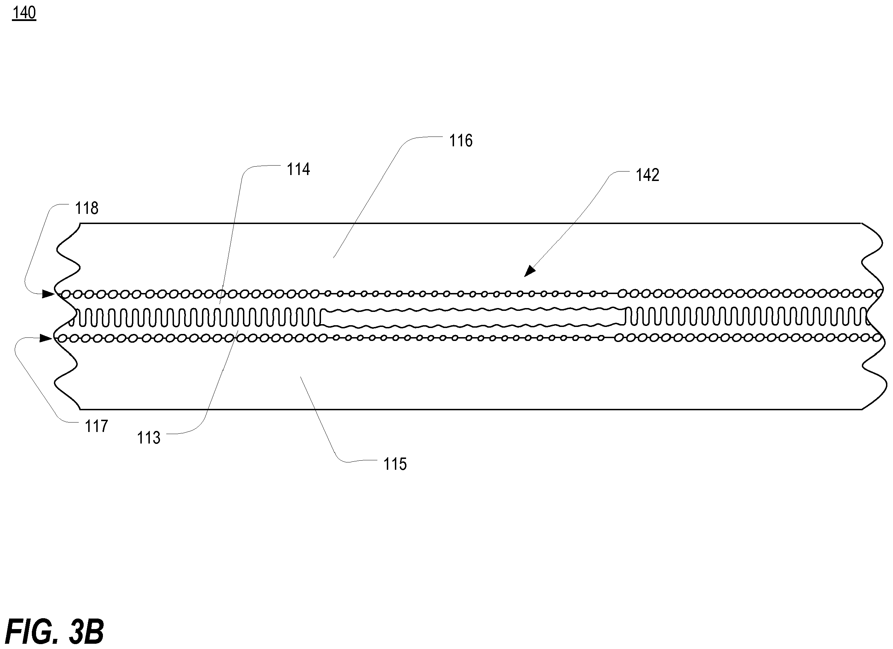

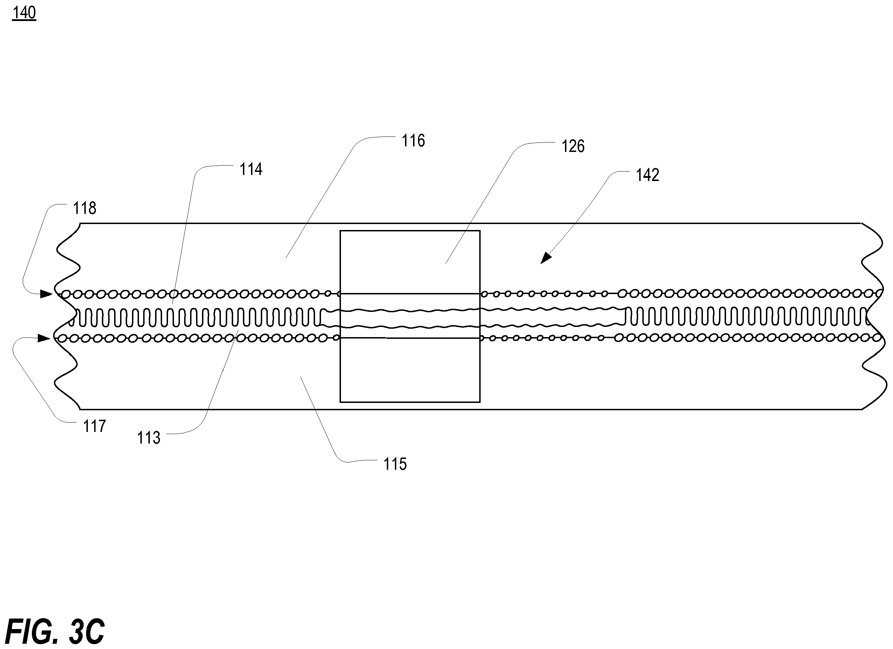

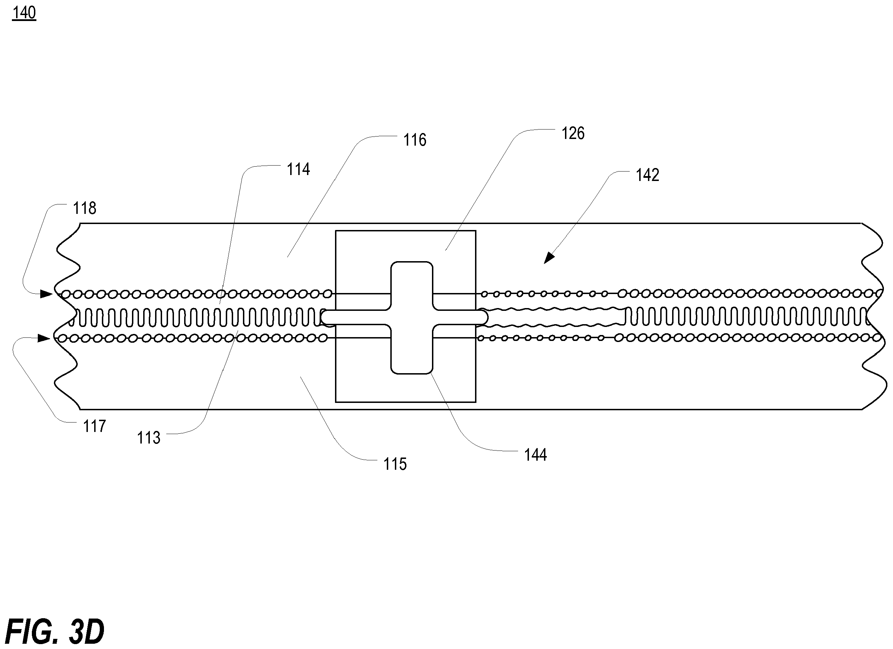

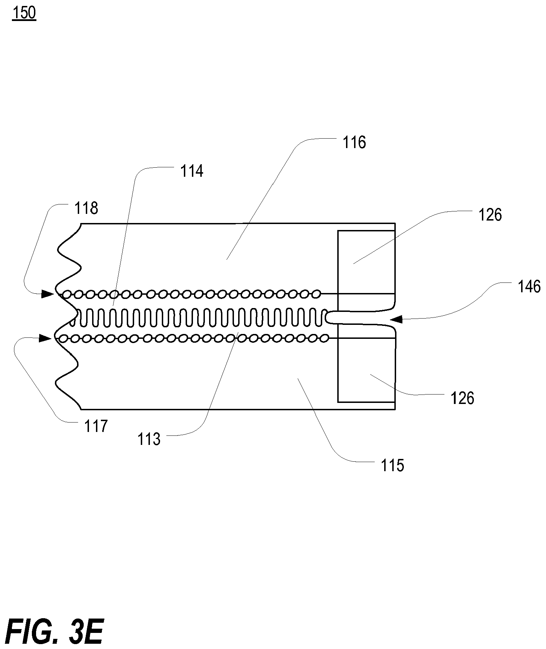

FIG. 3 is a flow chart illustrating a method **200** of preparing a semi-finished slide fastener assembly prior to installation in a thin shell garment, and FIGS. 3A-3E are illustrations that correspond with the flow chart of FIG. 3. Referring now to FIGS. 3 and 3A, the process of preparing a semi-finished slide fastener assembly begins at step **201** with provision of a continuous length of a slide fastener chain **140**. For purposes of this discussion, the slide fastener chain **140** can be a polyester coil-type zipper chain with ultra-thin slide fastener tapes. Other types and configurations of slide fastener chains are likewise contemplated. In FIG. 3A, a portion of the continuous length of slide fastener chain **140** is shown. The slide fastener chain **140** includes two rows of interlocked coil-type zipper teeth **113**,**114**. Each row of teeth **113**,**114** is attached to the cord bundle **117**,**118** of a corresponding slide fastener tape **115**,**116**.

With reference to FIGS. 3 and 3B, a gap space **142** is produced in the continuous length of slide fastener chain **140** at step **205**. In order to create the gap space **142**, a specified length of coil-type teeth of the slide fastener chain **140** is removed from the cord bundles **117**,**118**. Removal of the specified length of coil-teeth from the slide fastener chain **140** can be accomplished by a variety of different means. In a contemplated embodiment, the specified length of coil-type teeth is removed by a mechanical process. Removal of the specified length of coil-type teeth leaves the cord bundles **117,118** relatively intact on the surface of the slide fastener tapes **115,116.** The specified length of coil-type teeth that is removed should be long enough to accommodate introduction of a pin and box assembly, as discussed below.

With reference to FIGS. 3 and 3C, an inner reinforcing film **126** is applied to a portion of the gap space **142** at step **210**. As shown in FIG. 3C, the inner reinforcing film is bonded to the slide fastener tapes **115**,**116** and covers a portion of the cord bundles **117**,**118**. In at least some embodiments, the inner reinforcing film **126** has an adhesive backing that adheres to the slide fastener tapes **115**,**116** and cord bundles **117**,**118**. Additionally, in at least some embodiments, the inner reinforcing film **126** can be bonded using an ultrasonic horn (not shown) and an anvil (not shown). In this regard, an ultrasonic horn is brought to bear against the back side of the slide fastener chain **140** (the side without the inner reinforcing film **126**), and an anvil is brought to bear on the side of the slide fastener tape with the inner reinforcing film **126**. The anvil can be specifically configured to have precisely cut channels that accept the cord bundles **117**,**118**. Application of heat through the ultrasonic horn causes the inner reinforcing film **126** to bond to the cord bundles **117**,**118** and the slide fastener tapes **115,116.** The anvil forces the cord bundle/film combination into a precise shape that can accommodate attachment of a pin and box assembly later in the installation process.

Optionally, and with further reference to step **210** and FIG. 3C, an outer reinforcing film can be applied at a side of the slide fastener tapes **115**,**116** that is opposite of the coil-type teeth **113**,**114**. In this regard, it is contemplated that inner and outer reinforcing films can be applied simultaneously to the gap space **142** at opposite sides of the slide fastener tapes **115**,**116**.

With reference to FIGS. 3 and 3D, the film-reinforced gapped section of the slide fastener chain **140** is punched using a "T-cut" punch at step **215**. The T-cut punch severs the cord bundles **117,118** and removes portions of the film-reinforced slide fastener tapes **115**,**116**. As shown in FIG. 3D, application of the T-cut punch leaves behind a generally cross-shaped aperture **144** that extends fully through the slide fastener chain **140**.

With reference to FIGS. 3 and 3E, a desired length of the slide fastener chain is cut from the continuous length of slide fastener chain **140** at step **220**. As shown in FIG. 3E, the cut is made at the film-reinforced gapped section of the slide fastener chain **140**, and, specifically, is made across the cross-shaped aperture **144** left by the T-cut punch. Cutting the slide fastener chain **140** at this location results in creation of a semi-finished slide fastener assembly **150** that is ready to be installed into a garment. After the cut is made, the resulting semi-finished slide fastener assembly **150** includes two rows of interlocked coil-type zipper teeth **113**,**114**, each of which is attached to the cord bundle **117**,**118** of the corresponding slide fastener tape **115**,**116**. The slide fastener tapes **115**,**116** terminate at a film-reinforced end, where the coil-type teeth have been removed and where the cord bundles **117**,**118** have been precisely shaped by application of the inner reinforcing film **126** to be able to accommodate attachment of a pin and box assembly. Additionally, at the film-reinforced end, the slide fastener tapes **115**,**116** are separated by a small gap **146** left behind by the T-cut punch.

Additionally, it is contemplated that, after cutting the continuous length of slide fastener chain **140** at the film-reinforced gapped section thereof, each cut piece may, itself, be used as a semi-finished slide fastener assembly **150**. In other words, once the cut has been made, one end of each resulting piece terminates at a film-reinforced end, and each resulting piece can be processed separately as a semi-finished slide fastener assembly **150**, as described hereinbelow.

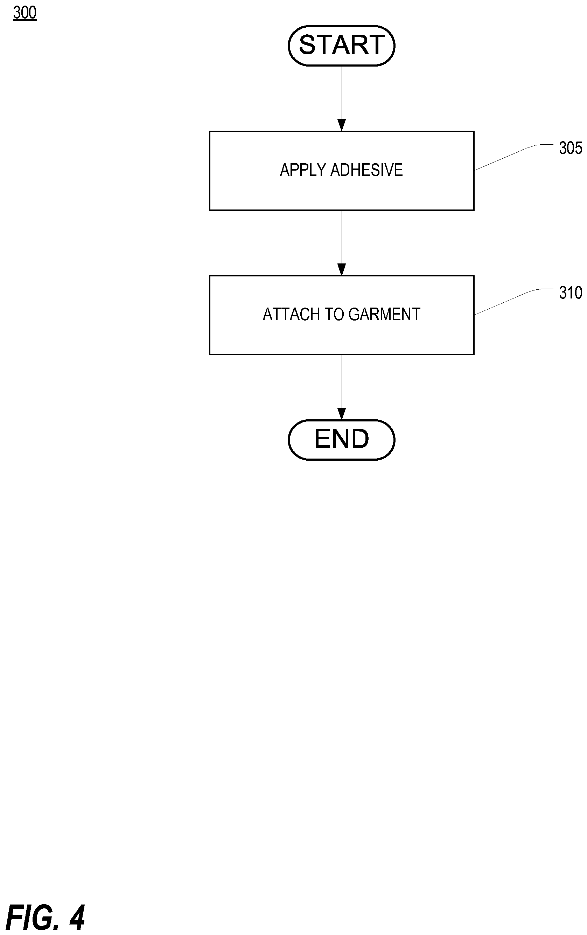

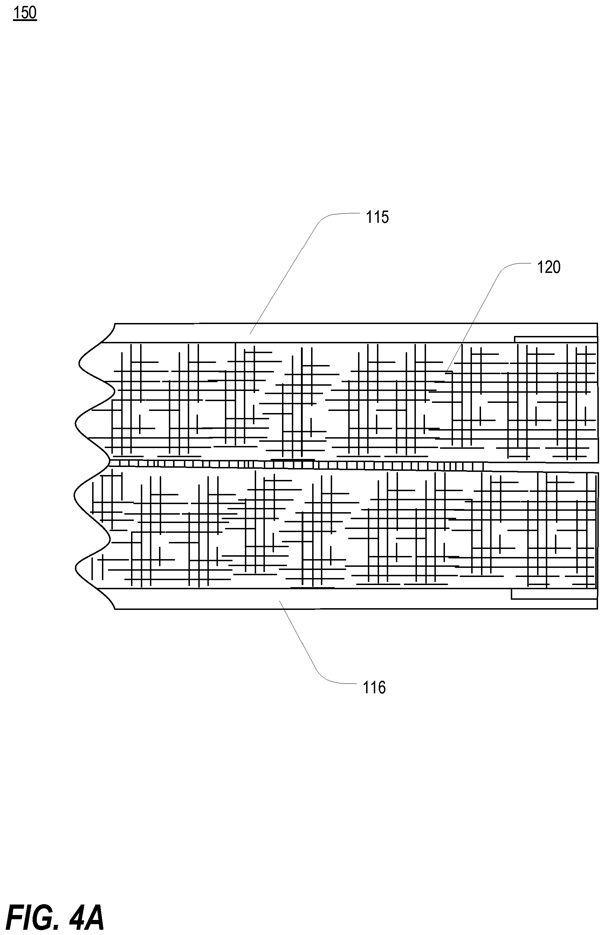

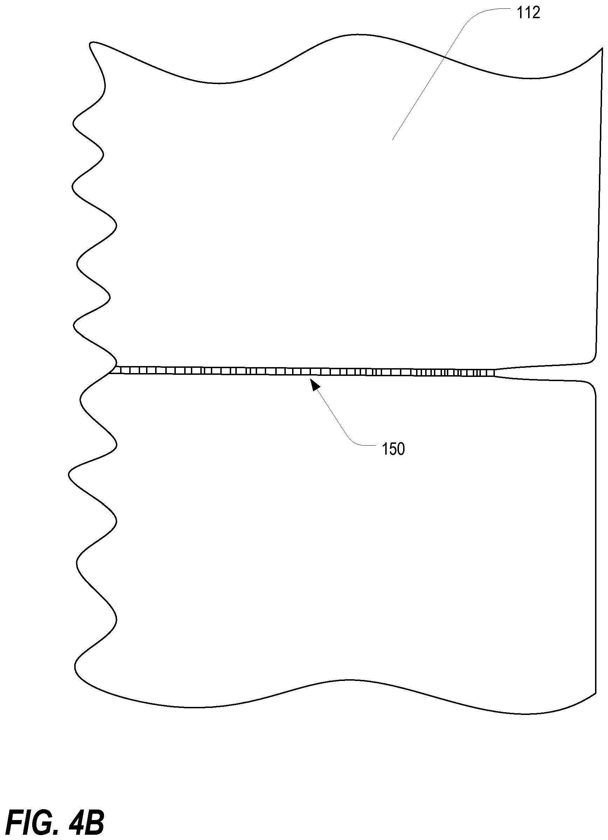

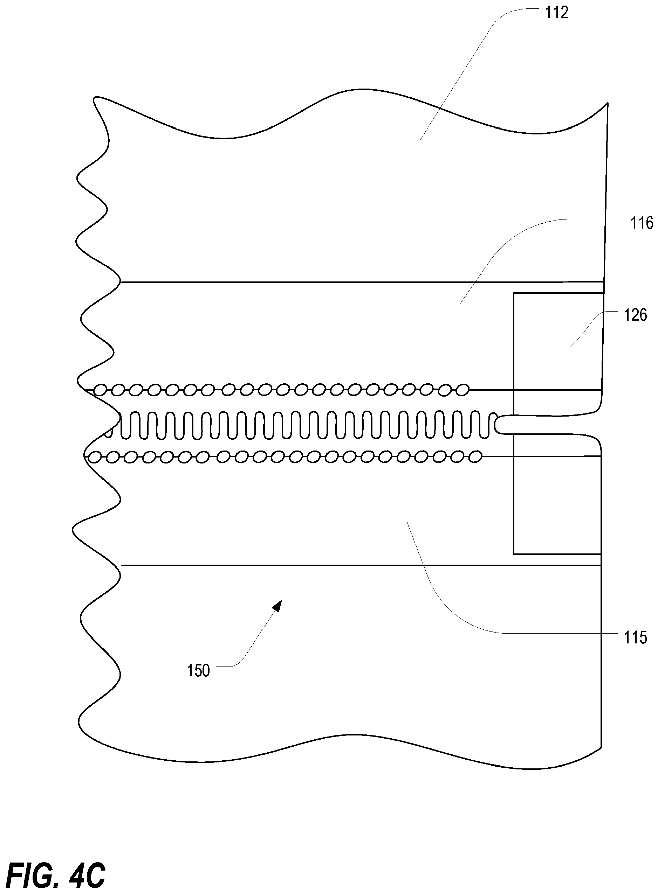

FIG. 4 is a flow chart illustrating a method **300** of bonding the semi-finished slide fastener assembly **150** of FIG. 3E to a thin shell garment, and FIGS. 4A-4C are illustrations that correspond with the flow chart of FIG. 4. Referring now to FIGS. 4 and 4A, the process of bonding the semi-finished slide fastener assembly **150** to a thin shell garment begins at step **305** with application of a thin-film adhesive **120** to the semi-finished slide fastener assembly **150**. In FIG. 4A, a reverse side of the semi-finished slide fastener assembly **150** of FIG. 3 is shown. The reverse side of the semi-finished slide fastener assembly **150** that can be seen in FIG. 4A is opposite to the side shown in FIG. 3E (where the coil-type teeth **113,114** and the inner reinforcing film **126** are visible).

The thin-film adhesive **120** can be applied as a layer of generally uniform thickness to the reverse side of the slide fastener tapes **115**,**116** at or adjacent to the film-reinforced end of the semi-finished slide fastener assembly **150**. In a contemplated embodiment, the thin-film adhesive **120** can be applied over the top of an outer reinforcing film that has been applied to the reverse side of at least a portion of the slide fastener tapes **115**,**116**.

With reference to FIGS. 4 and 4B, the semi-finished slide fastener assembly 150 is adhered to the thin fabric shell of a garment **112** by bonding the slide fastener tapes to the garment panels. In FIG. 4B, the exterior-facing side of the garment **112** is shown, and the semi-finished slide fastener assembly **150** is adhered to the interior-facing side of the garment **112**. The interior-facing side of the semi-finished slide fastener assembly **150** can be seen in FIG. 4C and is discussed in greater detail below. In an embodiment where the semi-finished slide fastener assembly **150** is installed as the center-front closure of a jacket, the semi-finished slide fastener assembly **150** is adhered simultaneously to the left and right front panels of the jacket.

It is further contemplated that the semi-finished slide fastener assembly **150** can be bonded to the garment by a variety of other means. For example, in some embodiments, it is contemplated that the semi-finished slide fastener assembly **150** can be sewn to the garment panels.

As further shown in FIG. 4B, the thin shell outer garment **112** substantially covers the slide fastener tapes of the semi-finished slide fastener assembly **150**, thereby protecting the slide fastener tapes from moisture and abrasion. Additionally, the grin of the slide fastener assembly **150** is narrow, thereby helping to minimize exposure of the coil-type teeth to the outside environment. FIG. 4C illustrates an interior-facing side of the garment **112** of FIG. 4B with the semi-finished slide fastener assembly **150** bonded thereto. As shown in FIG. 4C, the semi-finished slide fastener assembly **150** is bonded to the interior-facing side of the garment **112**, and the garment **112** is ready for further processing.

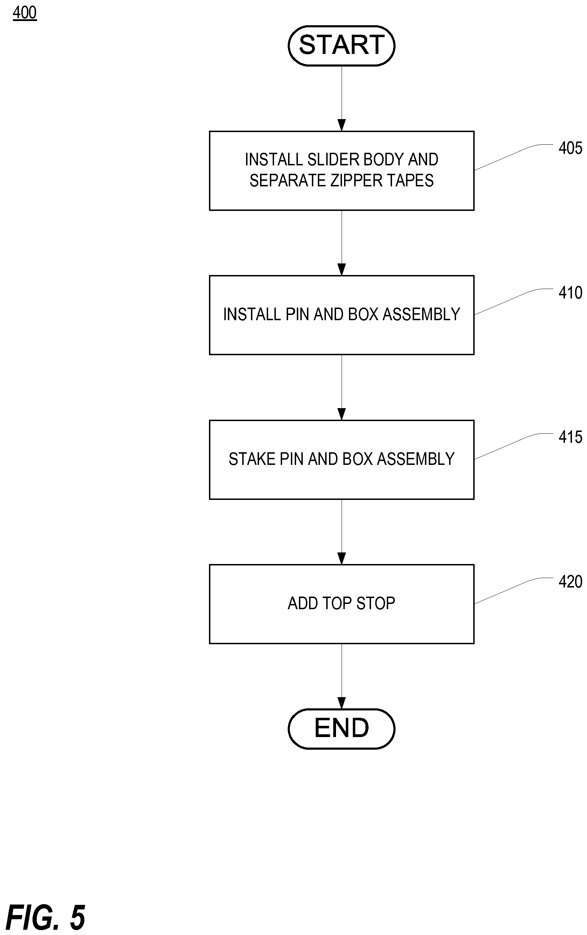

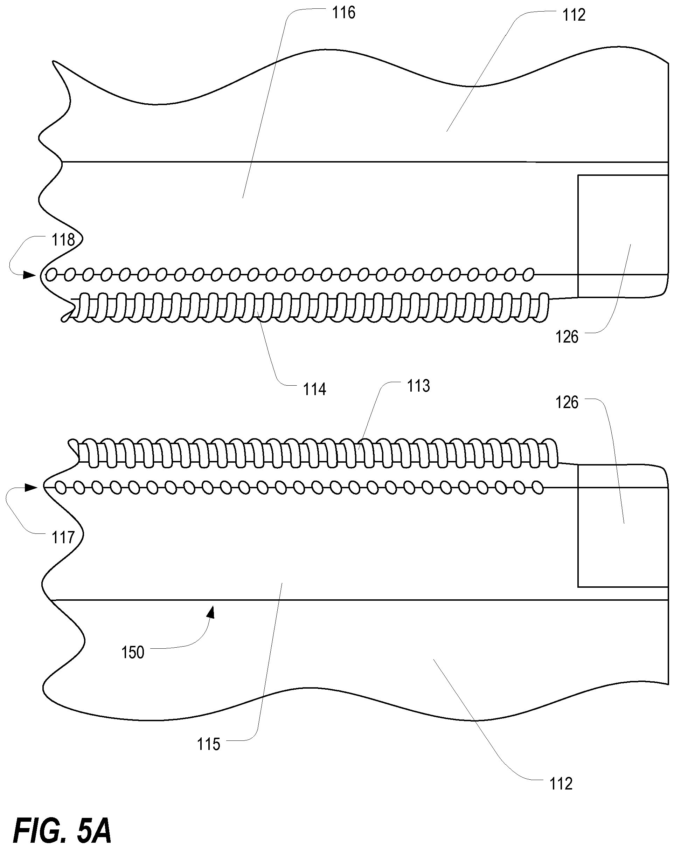

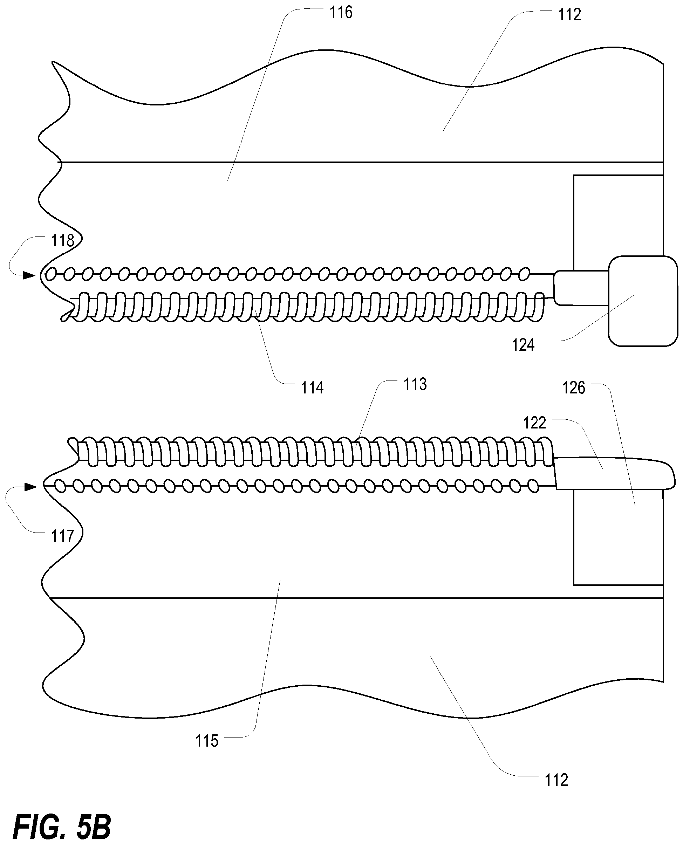

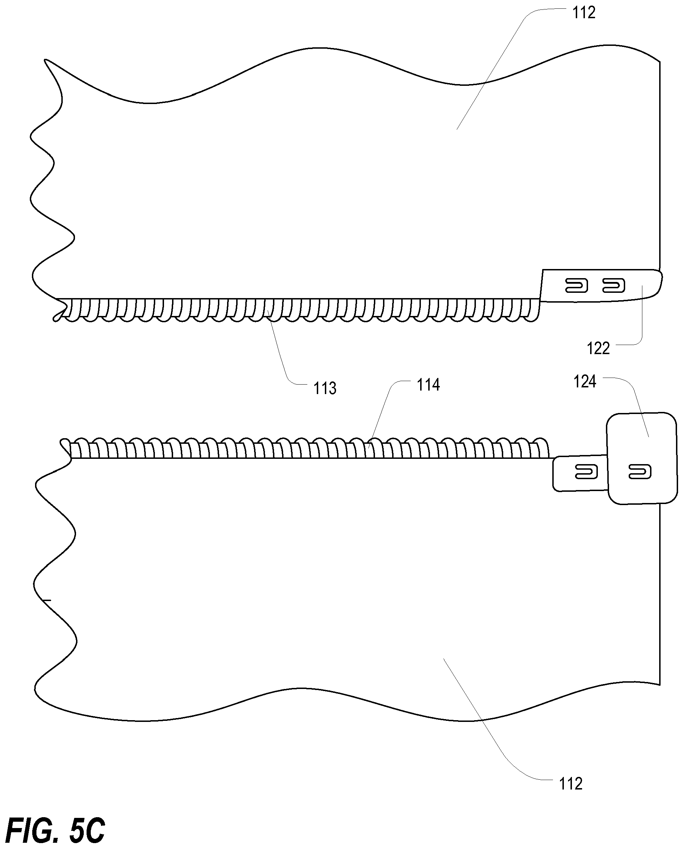

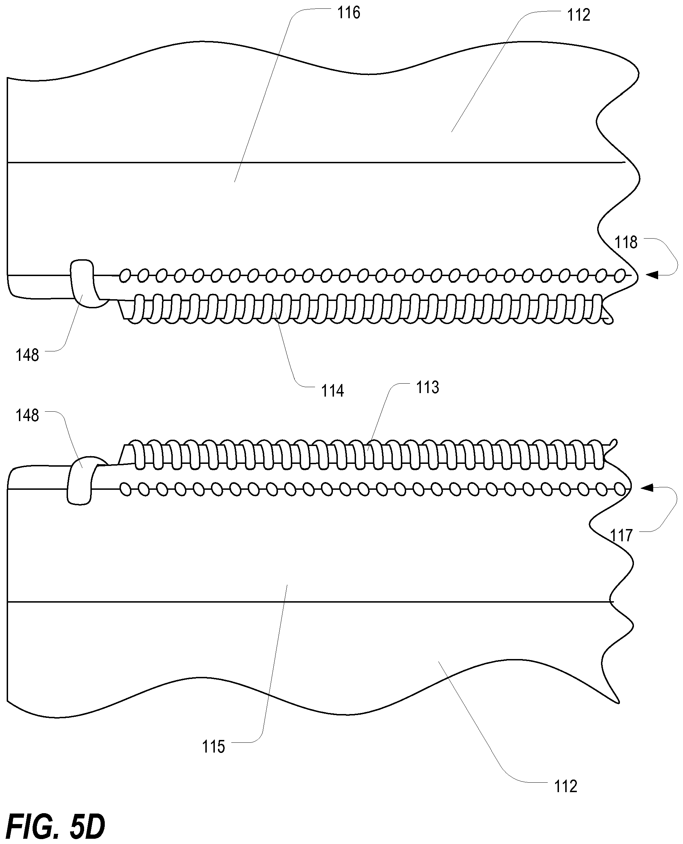

FIG. 5 is a flow chart illustrating a method **400** of installing a slider body and pin and box assembly in the semi-finished slide fastener assembly of FIG. 4, and FIGS. 5A-5D are illustrations that correspond with the flow chart of FIG. 5. Referring now to FIGS. 5 and 5A, the slide fastener tapes **115**,**116** are fully separated from one another at step **405**. FIG. 5A depicts the semi-finished slide fastener assembly **150** bonded to the garment with the slide fastener tapes **115**,**116** fully separated. It is contemplated that the slide fastener tapes **115**,**116** can be separated from one another by installing a slider body (not shown) at the end of the semi-finished slide fastener assembly **150** (i.e., the end where the pin and box assembly are later mounted, as discussed below) and then pulling the slider body through the coil-type teeth **113**,**114** so that the teeth are no longer interlocked. After separation of the slide fastener tapes **115**,**116**, the slider body can be retained in position along one of the rows of coil-type teeth for later use after the pin and box assembly has been installed. It is contemplated that the slider body can be retained along the row of coil-type teeth that will later accommodate the box of the pin and box assembly.

With reference to FIGS. 5 and 5B, a pin and box assembly **122**,**124** is installed over the film-reinforced portion of the cord bundles **117**,**118** at step **410**. In particular, the box **124** of the pin and box assembly is installed over the film-reinforced cord bundle **118** of the slide fastener tape **116** that previously received the slider body at step **405**, and the pin **122** of the pin and box assembly is installed over the film-reinforced cord bundle **117** of the other slide fastener tape **115**. The pin **122** can be positionally adjusted to maintain the proper spacing between the pin **122** and the adjacent row of coil-type teeth **113**. The box **124** can likewise be positionally adjusted to maintain the proper spacing between the box **124** and the adjacent row of coil-type teeth **114**. Referring back to step **210** of FIG. 3, the film-reinforced cord bundles **117**,**118** (at the end of the slide fastener tapes **115**,**116** where the pin and box assembly is installed) were shaped precisely when the reinforcing film was applied and ultrasonically bonded. In particular, the cord bundles **117**,**118** were shaped precisely so as to be capable of accommodating the pin **122** and the box **124** with relative ease. In this regard, the pin **122** and the box **124** can be easily installed onto slide fastener tapes **115**,**116** that have already been adhered to the garment **112**.

With reference to FIGS. 5 and 5C, the pin **122** and the box **124** are fastened to the cord bundles **117**,**118** of the slide fastener tapes **115**,**116** at step **415**. In a contemplated embodiment, the pin **122** and the box **124** are clamped and/or staked to the cord bundles **117**,**118**. Other means for fastening the pin **122** and the box **124** to the cord bundles **117**,**118** are likewise contemplated.

Optionally, and with reference to FIGS. 5 and 5D, a top stop **148** can be installed at a top end of one or both of the slide fastener tapes **115**,**116** at step **420**. The top stop **148** can be clamped, mounted or otherwise attached to top ends of the slide fastener tapes **115**,**116** at or near the cord bundles **117**,**118**. Top stops **148** provide an upper terminal for the slider body and prevent the slider body from being removed from the completed slide fastener assembly.

In another contemplated embodiment, a top stop **148** can be installed on one or both of the slide fastener tapes **115**,**116** earlier in the assembly process. In particular, it is contemplated that a top stop **148**, such as that which is depicted in FIG. 5D, can be installed on one or both of the slide fastener tapes **115**,**116** of the continuous length of slide fastener chain (discussed above in connection with FIGS. 3 and 3A-3E) after step **215** (when the film-reinforced gapped section of the slide fastener chain **140** is punched using a "T-cut" punch) and prior to step **220** (when a desired length of the slide fastener chain is cut from the continuous length of slide fastener chain **140**). In accordance with this embodiment, and with reference to FIGS. 3 and 3D, it is contemplated that a top stop can be installed on one or both of the slide fastener tapes **115,116** in between an end of the unused portion of the gap space **142** and the generally cross-shaped aperture **144** formed by the T-cut punch. In this regard, once the cut is applied at step **220**, the portion of the slide fastener chain not depicted in FIG. 3E (i.e., the portion that is cut away) will have a top stop already installed at an end of one or both of the slide fastener tapes **115**,**116** and can be further processed as part of a separate semi-finished slide fastener assembly.

Following the steps described in FIG. 5, the slide fastener tapes **115**,**116** are now fully burst (with the two rows of coil-type teeth **113**,**114** fully pulled apart along their entire length to completely disengage the coil-type teeth) and the slider body installed on the row of coil-type teeth **114** that includes the box **124** of the pin and box assembly. The finished slide fastener assembly is now ready for normal use.

The methods of the present invention allow a semi-finished slide fastener assembly to be incorporated into a garment by adhesive or other bonding means or sewing. In accordance with the methods of the present invention, a semi-finished slide fastener assembly that is assembled away from the garment can be completed by adding a slider body and a pin and box assembly after the semi-finished slide fastener assembly is adhered to a garment. Additionally, a slide fastener assembly with ultra-thin slide fastener tapes that is installed in accordance with the methods of the present invention can enhance water-resistant aspects of the garment and help to minimize bulkiness. As can now be appreciated, a slide fastener assembly installed in accordance with the present invention can be opened and closed with relative ease, and can maintain a very narrow grin between the adjacent edges of the front panels of the garment in order to enhance the water-resistant capability of the finished garment.

Based on the foregoing information, it will be readily understood by those persons skilled in the art that the present invention is susceptible of broad utility and application. Many embodiments and adaptations of the present invention other than those specifically described herein, as well as many variations, modifications, and equivalent arrangements, will be apparent from or reasonably suggested by the present invention and the foregoing descriptions thereof, without departing from the substance or scope of the present invention.

Accordingly, while the present invention has been described herein in detail in relation to one or more preferred embodiments, it is to be understood that this disclosure is only illustrative and exemplary of the present invention and is made merely for the purpose of providing a full and enabling disclosure of the invention. The present invention is limited only by the claims appended hereto.

## Claims

1. A method of preparing a semi-finished slide fastener assembly (150) for installation in a thin shell garment (112), the method comprising:
providing a slide fastener chain (140) comprised of two interlocked rows of teeth (113;114), each row of teeth being attached to a cord bundle (117;118) of a respective slide fastener tape (115);
removing the interlocked rows of teeth from a portion of the slide fastener chain, thereby defining a length of the slide fastener chain without teeth;
introducing a reinforcing film (126;128) to the cord bundles, at a location along the length of the slide fastener chain (140) without teeth, to shape the cord bundles for accommodation of a pin and box assembly (122;124);
introducing an aperture (144) into the slide fastener chain, at a film-reinforced location along the length of the slide fastener chain without teeth, to sever the film-reinforced cord bundles; and
cutting the slide fastener chain across the aperture, thereby defining a semi-finished slide fastener assembly terminating in a film-reinforced end.

2. The method of claim 1, wherein the slide fastener chain (140) is a polyester coil-type zipper chain.

3. The method of claim 1, wherein the reinforcing film (126;128) includes an adhesive.

4. The method of claim 1, wherein the portion of the slide fastener chain (140) from which the interlocked rows of coil-type teeth (113;114) are removed is an intermediate portion.

5. The method of claim 1, wherein introducing the reinforcing film (126;128) to the cord bundles (117;118) includes ultrasonically bonding the reinforcing film to the cord bundles with an ultrasonic horn and an anvil.

6. The method of claim 1, wherein introducing the aperture (144) into the slide fastener chain (140) at a film-reinforced location includes punching the slide fastener chain with a punch to create the aperture.

7. The method of claim 6, wherein the aperture (144) is formed by a T-cut punch.

8. A method of installing a slide fastener assembly in a thin shell garment (112), the method comprising:
preparing a semi-finished slide fastener assembly terminating in a film-reinforced end by performing the method as claimed in any of claims 1 to 7;
attaching the semi-finished slide fastener assembly (150) to one or more panels of a thin shell garment; and
after attachment of the semi-finished slide fastener assembly to the one or more panels of the thin shell garment, installing a pin and box assembly (122;124) at the film-reinforced end of the semi-finished slide fastener assembly.

9. The method of claim 8, further comprising, prior to installation of the pin and box assembly, installing a slider body (130) at the film-reinforced end of the semi-finished slide fastener assembly.

10. The method of claim 9, further comprising pulling the slider body (130) through the interlocked rows of teeth (113;114) to separate the slide fastener tapes (115;116) from one another.

11. The method of claim 8, wherein attaching the semi-finished slide fastener assembly to the thin shell garment comprises:
applying a thin-film adhesive to a side of the slide fastener tapes (115;116) of the semi-finished slide fastener assembly (150) opposite of the teeth; and
adhering the semi-finished slide fastener assembly to an interior-facing side of the thin shell garment (112).

12. The method of claim 8, wherein the semi-finished slide fastener (150) assembly is attached to one or more panels of the thin shell garment (112) that define a center-front opening.

13. The method of claim 8, wherein installing the pin and box assembly (122;124) comprises:
staking or clamping a pin of the pin and box assembly to a film-reinforced cord bundle (117;118) of one of the slide fastener tapes; and
staking or clamping a box of the pin and box assembly to a film-reinforced cord bundle of the other of the slide fastener tapes.

## Patentansprüche

1. Verfahren zum Herstellen einer halbfertigen Reißverschlussanordnung (150) zur Anbringung in einem Kleidungsstück mit dünnem Außenmaterial (112), das Verfahren umfassend:
Bereitstellen einer Reißverschlusskette (140), die aus zwei miteinander verzahnten Zahnreihen (113; 114) besteht, wobei jede Zahnreihe an einem Schnurbündel (117; 118) eines jeweiligen Reißverschlussbandes (115) befestigt ist;
Entfernen der miteinander verzahnten Zahnreihen aus einem Abschnitt der Reißverschlusskette, sodass dadurch eine Länge der Reißverschlusskette ohne Zähne definiert wird;
Einführen einer Verstärkungsfolie (126; 128) in die Schnurbündel, an einer Stelle entlang der Länge der Reißverschlusskette (140) ohne Zähne, um die Schnurbündel zur Aufnahme einer Einsteckteil- und Kastenteilanordnung (122; 124) zu gestalten;
Einführen einer Öffnung (144) in die Reißverschlusskette an einer folienverstärkten Stelle entlang der Länge der Reißverschlusskette ohne Zähne, um die folienverstärkten Schnurbündel zu trennen;
Schneiden der Reißverschlusskette durch die Öffnung hindurch und dadurch Definieren einer halbfertigen Reißverschlussanordnung, die in einem folienverstärkten Ende endet.

2. Verfahren nach Anspruch 1, wobei die Reißverschlusskette (140) eine spiralartige Polyester-Reißverschlusskette ist.

3. Verfahren nach Anspruch 1, wobei die Verstärkungsfolie (126; 128) einen Klebstoff beinhaltet.

4. Verfahren nach Anspruch 1, wobei der Abschnitt der Reißverschlusskette (140), aus dem die ineinander verzahnten Reihen spiralartiger Zähne (113; 114) entfernt werden, ein Zwischenabschnitt ist.

5. Verfahren nach Anspruch 1, wobei das Einführen der Verstärkungsfolie (126; 128) in die Schnurbündel (117; 118) das Ultraschallverbinden der Verstärkungsfolie mit den Schnurbündeln mit einem Ultraschallhorn und einem Amboss beinhaltet.

6. Verfahren nach Anspruch 1, wobei das Einführen der Öffnung (144) in die Reißverschlusskette (140) an einer folienverstärkten Stelle das Stanzen der Reißverschlusskette mit einem Stempel beinhaltet, um die Öffnung zu erzeugen.

7. Verfahren nach Anspruch 6, wobei die Öffnung (144) durch einen T-Schnittstempel gebildet ist.

8. Verfahren zum Einsetzen einer Reißverschlussanordnung in einem Kleidungsstück mit dünnem Außenmaterial (112), das Verfahren umfassend:
Herstellen einer halbfertigen Reißverschlussanordnung, die in einem folienverstärkten Ende endet, durch Ausführen des Verfahrens nach einem der Ansprüche 1 bis 7;
Befestigen der halbfertigen Reißverschlussanordnung (150) an einem oder mehreren Stücken eines Kleidungsstücks mit dünnem Außenmaterial; und
nach dem Befestigen der halbfertigen Reißverschlussanordnung an dem einen oder den mehreren Stücken des Kleidungsstücks mit dünnem Außenmaterial, Einsetzen einer Einsteckteil- und Kastenteilanordnung (122; 124) an dem folienverstärkten Ende der halbfertigen Reißverschlussanordnung.

9. Verfahren nach Anspruch 8, ferner umfassend, vor dem Einsetzen der Einsteckteil- und Kastenteilanordnung, Einsetzen eines Schieberkörpers (130) an dem folienverstärkten Ende der halbfertigen Reißverschlussanordnung.

10. Verfahren nach Anspruch 9, ferner umfassend das Ziehen des Schieberkörpers (130) durch die miteinander verzahnten Zahnreihen (113; 114), um die Reißverschlussbänder (115; 116) voneinander zu trennen.

11. Verfahren nach Anspruch 8, wobei das Befestigen der halbfertigen Reißverschlussanordnung an dem Kleidungsstück mit dünnem Außenmaterial umfasst:
Aufbringen eines Dünnfilmklebstoffs auf eine Seite der Reißverschlussbänder (115; 116) der halbfertigen Reißverschlussanordnung (150) gegenüber den Zähnen; und
Verkleben der halbfertigen Reißverschlussanordnung an einer der Innenseite zugewandten Seite des Kleidungsstücks mit dünnem Außenmaterial (112).

12. Verfahren nach Anspruch 8, wobei die halbfertige Reißverschlussanordnung (150) an einem oder mehreren Stücken des Kleidungsstücks mit dünnem Außenmaterial (112) befestigt ist, die eine Öffnung der vorderen Mitte definieren.

13. Verfahren nach Anspruch 8, wobei das Einsetzen der Einsteckteil- und Kastenteilanordnung (122; 124) umfasst:
Verkerben oder Festklemmen eines Einsteckteils der Einsteckteil- und Kastenteilanordnung an einem folienverstärkten Schnurbündel (117; 118) von einem der Reißverschlussbänder; und
Verkerben oder Festklemmen eines Kastenteils der Einsteckteil- und Kastenteilanordnung an einem folienverstärkten Schnurbündel des anderen der Reißverschlussbänder.

## Revendications

1. Procédé de préparation d'un ensemble fermeture à glissière semi-fini (150) à installer dans un vêtement à enveloppe mince (112), le procédé comprenant :
disposer une chaîne de fermeture à glissière (140) comprenant deux rangées emboîtées de dents (113 ; 114), chaque rangée de dents étant attachée à un faisceau de cordons (117 ; 118) d'une bande de fermeture à glissière respective (115) ;
retirer les rangées emboîtées de dents d'une partie de la chaîne de fermeture à glissière, définissant ainsi une longueur de la chaîne de fermeture à glissière sans dents ;
introduire un film de renforcement (126 ; 128) dans les faisceaux de cordons, à un emplacement le long de la longueur de la chaîne de fermeture à glissière (140) sans dents, pour mettre en forme les faisceaux de cordons pour la réception d'un ensemble tube mobile et boîte (122 ; 124) ;
introduire une ouverture (144) dans la chaîne de fermeture à glissière, à un emplacement renforcé par film le long de la longueur de la chaîne de fermeture à glissière sans dents, pour couper les faisceaux de cordons renforcés par film ; et
couper la chaîne de fermeture à glissière à travers l'ouverture, définissant ainsi un ensemble fermeture à glissière semi-fini se terminant dans une extrémité renforcée par film.

2. Procédé selon la revendication 1, dans lequel la chaîne de fermeture à glissière (140) est une chaîne de fermeture de type à rouleau en polyester.

3. Procédé selon la revendication 1, dans lequel le film de renforcement (126 ; 128) comprend un adhésif.

4. Procédé selon la revendication 1, dans lequel la partie de la chaîne de fermeture à glissière (140) à partir de laquelle les rangées emboîtées de dents de type rouleau (113 ; 114) sont retirées, est une partie intermédiaire.

5. Procédé selon la revendication 1, dans lequel introduire le film de renforcement (126 ; 128) dans les faisceaux de cordons (117 ; 118) comprend lier par ultrasons le film de renforcement aux faisceaux de cordons avec une sonde à ultrasons et une enclume.

6. Procédé selon la revendication 1, dans lequel introduire l'ouverture (144) dans la chaîne de fermeture à glissière (140) à un emplacement renforcé par film comprend poinçonner la chaîne de fermeture à glissière avec un poinçon pour créer l'ouverture.

7. Procédé selon la revendication 6, dans lequel l'ouverture (144) est formée par un poinçon de coupe en T.

8. Procédé d'installation d'un ensemble fermeture à glissière dans un vêtement à enveloppe mince (112), le procédé comprenant :
préparer un ensemble fermeture à glissière semi-fini se terminant dans une extrémité renforcée par film par mise en œuvre du procédé selon l'une quelconque des revendications 1 à 7 ;
attacher l'ensemble fermeture à glissière semi-fini (150) à un ou plusieurs panneaux d'un vêtement à enveloppe mince ; et
après attache de l'ensemble fermeture à glissière semi-fini à un ou plusieurs panneaux du vêtement à enveloppe mince, installer un ensemble tube mobile et boîte (122 ; 124) à l'extrémité renforcée par film de l'ensemble fermeture à glissière semi-fini.

9. Procédé selon la revendication 8, comprenant en outre, avant installation de l'ensemble tube mobile et boîte, installer un corps de curseur (130) à l'extrémité renforcée par film de l'ensemble fermeture à glissière semi-fini.

10. Procédé selon la revendication 9, comprenant en outre tirer le corps de curseur (130) à travers les rangées emboîtées de dents (113 ; 114) pour séparer les bandes de fermeture à glissière (115 ; 116) l'une de l'autre.

11. Procédé selon la revendication 8, dans lequel attacher l'ensemble fermeture à glissière semi-fini au vêtement à enveloppe mince comprend :
appliquer un adhésif à film mince sur un côté des bandes de fermeture à glissière (115 ; 116) de l'ensemble fermeture à glissière semi-fini (150) opposé aux dents ; et
amener l'ensemble fermeture à glissière semi-fini à adhérer à un côté, orienté vers l'intérieur, du vêtement à enveloppe mince (112).

12. Procédé selon la revendication 8, dans lequel l'ensemble fermeture à glissière semi-fini (150) est attaché à un ou plusieurs panneaux du vêtement à enveloppe mince (112) qui définissent une ouverture avant centrale.

13. Procédé selon la revendication 8, dans lequel installer l'ensemble tube mobile et boîte (122 ; 124) comprend :
fixer ou serrer un tube mobile de l'ensemble tube mobile et boîte à un faisceau de cordons renforcé par film (117 ; 118) de l'une des bandes de fermeture à glissière ; et
fixer ou serrer une boîte de l'ensemble tube mobile et boîte à un faisceau de cordons renforcé par film de l'autre des bandes de fermeture à glissière.
